# FASCICULE DE BREVET EUROPEEN

(11) **EP 0 625 482 B1**
(45) Date de publication et mention de la délivrance du brevet: **24.11.1999**
(21) Numéro de dépôt: 94460013.9
(22) Date de dépôt: 10.05.1994
(51) Int. Cl.: C02F 1/28, C02F 1/78, B01J 20/34

(54) **Procédé d'épuration d'un effluent aqueux par oxydation sur support adsorbant**
Verfahren zur Reinigung von Abwässern durch Oxidation auf einen Adsorbentträger
Method for the purification of an aqueous effluent by oxidation on a sorbent support

(30) Priorité: 18.05.1993 FR 9306176
(43) Date de publication de la demande: 23.11.1994
(73) Titulaire: OMNIUM DE TRAITEMENTS ET DE VALORISATION OTV Société Anonyme, 92407 Courbevoie Cédex (FR)
(72) Inventeur: Paillard, Hervé, F-85340 Vernon (FR); Bigot, Véronique, F-75017 Paris (FR)
(74) Mandataire: Vidon, Patrice

(56) Documents cités:
- EP-A- 0 495 707
- WO-A-90/14312
- DE-A- 2 740 768
- FR-A- 2 583 036
- PATENT ABSTRACTS OF JAPAN vol. 10, no. 296 (C-377) (2352) 8 Octobre 1986 & JP-A-61 111 191 (KAZUO ONO) 29 Mai 1986
- IBM TECHNICAL DISCLOSURE BULLETIN, vol.24, no.5, Octobre 1981 pages 2443 - 2445 J.B.JABLONSKI 'Pressure-enhanced ozone treatment of organics in wastewater'

## Description

L'invention concerne le domaine de l'épuration des effluents aqueux et s'applique notamment, mais non exclusivement :
- au traitement des eaux de surface en vue de leur potabilisation ;
- au traitement des eaux usées industrielles ou domestiques ;
- au traitement des lixiviats (percolats) de décharge ;
- au traitement de dépollution des eaux souterraines.

Les traitements d'épuration des effluents aqueux ont pour objectif principal d'éliminer la matière organique contenue dans ces effluents. Plusieurs procédés peuvent être mis en oeuvre pour atteindre un tel objectif.

Il est ainsi connu de filtrer les effluents sur un matériau adsorbant, tel que du charbon actif, susceptible de retenir la matière organique qu'ils contiennent. Une telle technique présente l'inconvénient majeur de nécessiter de grandes quantités de matériau adsorbant, pour une quantité donnée de matière organique à éliminer, et donc d'être très coûteuse. La régénération du matériau adsorbant est elle-même onéreuse.

D'autres procédés mettent en oeuvre une filtration sur membrane, tel qu'une membrane de microfiltration, de nanofiltration ou d'osmose inverse. Outre le fait qu'ils sont également relativement coûteux, de tels procédés présentent aussi l'inconvénient de concentrer la matière organique polluante plutôt que de la détruire. Cette matière organique récupérée doit donc ensuite être dégradée, généralement par incinération.

Encore d'autres procédés d'élimination de la matière organique mettent en oeuvre une étape consistant à faire floculer celle-ci, en introduisant un ou plusieurs composés coagulants dans les effluents traités. Ces composés coagulants peuvent être des composés minéraux, tels que par exemple du polychlorure d'aluminium, du sulfate d'alumine ou du chlorure ferrique ou bien des composés organiques, tels que par exemple des polymères cationiques. Les flocs formés par la matière organique coagulés peuvent ensuite être éliminés par décantation.

De tels procédés présentent l'inconvénient majeur de produire énormément de boues, qui constituent un sous-produit difficile à éliminer. On notera que, selon un procédé de coagulation-floculation-décantation amélioré, l'étape de floculation peut-être combinée à une oxydation par introduction dans l'effluent du réactif de Fenton (H₂O₂/Fe²⁺). Bien que moins importantes que dans le cas d'un procédé de floculation classique, les quantités de boues produites lors de la mise en oeuvre d'un tel procédé n'en restent pas moins très importantes.

Enfin, certains procédés d'épuration des effluents aqueux mettent en oeuvre une étape d'oxydation poussée de la matière organique grâce à un oxydant puissant (tel que par exemple l'ozone, le chlore, le bioxyde de chlore) ou grâce à un système oxydant puissant (tel que par exemple Ozone/UV, ozone peroxyde d'hydrogène, peroxyde d'hydrogène/UV). L'oxydation permet la dégradation des molécules organiques en molécules plus petites et mieux biodégradables. C'est à ce type de procédé d'élimination de la matière organique que se rapporte l'invention.

Parmi les produits oxydants classiquement utilisés pour oxyder la matière organique, l'ozone est l'oxydant le plus intéressant, car il est capable de détruire complètement la matière organique en la "minéralisant", sous certaines conditions de mise en oeuvre, en dioxyde de carbone et en sels minéraux. De plus, l'ozone autorise des réactions radicalaires impliquant le radical libre OH^{·} qui permet d'oxyder très fortement la matière organique lorsqu'il est appliqué à un pH basique ou en combinaison avec le peroxyde d'hydrogène ou bien encore avec un rayonnement ultra-violet (le potentiel d'oxydo-réduction du peroxyde d'hydrogène est de 1,6 Volts, celui de l'ozone est de 2,07 tandis que celui du radical OH^{·} est de 2,7).

Les procédés mettant en oeuvre une oxydation permettent donc de détruire la matière organique polluante contenue dans les effluents aqueux et non simplement de la concentrer comme c'est le cas dans les procédés de filtration ou de la séparer de la phase aqueuse comme c'est le cas dans les procédés de coagulation-floculation-décantation.

De tels procédés montrent toutefois l'inconvénient économique de nécessiter des quantités relativement importantes de produit(s) oxydant(s) pour traiter une quantité donnée d'effluents et ne sont donc généralement utilisés que pour traiter les eaux peu chargées en matière organique, par exemple dans le cadre d'installation de potabilisation de celles-ci.

L'objectif principal de l'invention est de fournir un procédé d'épuration d'effluents aqueux incluant une étape d'oxydation optimisée, c'est-à-dire dans laquelle la quantité de produit oxydant nécessaire pour traiter un volume donné d'effluent aura été réduite par rapport aux techniques classiques d'oxydation.

Un tel procédé pourra être utilisé pour épurer les eaux très chargées en matière organique comme par exemple certains effluents industriels ou encore les lixiviats de décharge, c'est-à-dire les eaux s'écoulant à travers des épaississeurs de déchets stockés. Ces effluents se caractérisent généralement par une charge en matière organique très importante et très peu biodégradable. Classiquement ces lixiviats montrent un ratio DBO₅/DCO souvent inférieur à 0,1 traduisant une très faible biodégradabilité (la DBO₅ représente la "Demande Biologique en Oxygène" de l'effluent et traduit la quantité de matière organique présente dans celui-ci dégradée par voie biologique, tandis que la DCO représente la "Demande Chimique en Oxygène" de l'effluent et traduit la quantité totale de matière organique présente dans celui-ci). L'épuration de tels effluents est donc problématique puisque seuls des procédés de traitement coûteux peuvent être utilisés pour les décharger de leur matières organiques. En particulier, il ne pouvait être envisagé jusqu'ici de traiter les lixiviats de décharge par des techniques mettant en oeuvre des oxydants puissants avec des coûts de traitement raisonnables.

Un autre objectif de l'invention est de fournir un procédé montrant une grande simplicité d'exploitation.

Encore un autre objectif est de fournir un tel procédé mettant en oeuvre peu de produit par rapport aux techniques existantes de l'état de l'art.

Un autre objectif de l'invention est aussi de proposer un tel procédé permettant d'obtenir un rendement d'abattement de la matière organique proche de 100% y compris dans les effluents très chargés en pollution carbonée tels que les lixiviats de décharge, et ce avec des quantités de produits relativement faibles.

Ces objectifs sont atteints, grâce à l'invention qui concerne un procédé d'épuration d'un effluent aqueux chargé en matière organique comprenant les étapes consistant à faire transiter ledit effluent aqueux à épurer à travers au moins une colonne de traitement (1) contenant au moins un support adsorbant et à oxyder ladite matière organique par injection d'au moins un composé oxydant,
caractérisé en ce que ledit support adsorbant est choisi de façon à être inerte vis-à-vis dudit réactif oxydant et caractérisé par :
- une première phase d'une durée comprise entre 1 et 60 minutes au cours de laquelle l'effluent transite dans ladite colonne,
   . soit en absence d'injection dudit composé oxydant,
   . soit en effectuant une co-injection dudit composé oxydant et d'au moins un élément décomposeur ou d'au moins un réactif fortement réducteur permettant de détruire ledit composé oxydant,
      ladite première phase permettant de concentrer ladite matière organique sur ledit support adsorbant sans oxyder celle-ci,
- une seconde phase d'une durée comprise entre 1 et 60 minutes au cours de laquelle l'effluent transite dans la même colonne et au cours de laquelle le composé oxydant est injecté sans co-injection d'élément décomposeur ou de réactif fortement réducteur, ladite seconde phase permettant d'oxyder ladite matière organique concentrée sur ledit support adsorbant.

Le procédé selon l'invention comprend au moins une étape d'oxydation visant à éliminer, au moins partiellement, la matière organique contenue dans un effluent aqueux et est caractérisé en ce qu'il consiste à transférer ledit effluent aqueux à épurer à travers un support adsorbant tel qu'il filtre et concentre les charges en matière organique dudit effluent et à traiter la matière organique concentrée dans ledit support par injection d'un composé oxydant.

L'invention consiste donc à mettre en oeuvre un traitement oxydant sur de la matière organique qui a été piégée et concentrée dans un support adsorbant. On notera que, comme il a déjà été précisé, on connaît dans l'état de la technique des procédés de traitement d'effluents aqueux mettant en oeuvre des composés poreux et/ou adsorbants, tels que notamment le charbon actif. Toutefois, dans le cadre de ces procédés de l'état de l'art, ces composés poreux et/ou adsorbants ne sont utilisés que pour filtrer les effluents, ou pour servir de support au développement des bactéries utilisées dans le cadre de traitements d'épuration par voie biologique. Il ne s'agit pas dans ces modes de réalisation connus de piéger la matière organique afin d'y mieux faire agir un composé oxydant.

Les lits de charbon actif sont d'ailleurs généralement utilisés après l'étape d'oxydation (par exemple à la sortie des réacteurs d'oxydation) pour filtrer les effluents préalablement oxydés, c'est-à-dire à un stade où quasiment toute la matière organique a déjà été partiellement ou totalement dégradée. En effet, il ne saurait être question d'utiliser de tels lits, selon les techniques de l'état de l'art, pour des effluents très chargés en matière organique, au risque de voir ces lits se saturer très rapidement.

On connaît également dans l'état de la technique des procédés d'épuration d'effluents aqueux mettant en oeuvre une injection d'un composé oxydant et un support adsorbant. De telles techniques sont décrites dans DE-A-27 40768, WO-A-90 14312 et dans l'article intitulé "Pressure-enhanced ozone treatment of organics in waste water" paru dans IBM Technical Disclosure Bulletin, volume 24, N° 5, 6 octobre 1981, pages 2443-2445. Toutefois, dans ces techniques, le support utilisé est un support qui n'est pas inerte vis-à-vis du réactif oxydant et donc susceptible de décomposer celui-ci. De plus, les techniques décrites dans DE '768 et WO '312 de permettent de concentrer efficacement la mattière organique avant de l'oxyder.

La combinaison du traitement de l'effluent par un composé oxydant et d'un matériau adsorbant au niveau duquel se retrouve piégée la matière organique contenue dans ledit effluent, présente une synergie réelle, puisqu'elle permet de concentrer la matière organique et ainsi d'optimiser l'action du composé oxydant mis en oeuvre. La rétention de la matière organique au sein du support adsorbant permet en effet d'utiliser, pour éliminer une quantité donnée de matière organique, une quantité de composé oxydant moins importante que les quantités nécessaires à la mise en oeuvre d'un procédé d'oxydation classique.

Selon l'invention, le procédé comprend une étape préliminaire de concentration de la matière organique, consistant à adsorber ladite matière organique sur ledit support adsorbant en l'absence dudit composé oxydant. Plus précisément, cette, étape consiste à faire passer l'effluent à traiter sur le support adsorbant sans procéder à une oxydation concomitante puis, après un temps prédéterminé en fonction de la charge en matière organique de l'effluent, à procéder à une telle oxydation tout en poursuivant l'adsorption. Cette étape peut être avantageusement mise en oeuvre lorsque l'effluent présente une charge faible en matière organique. Ce peut notamment être le cas pour les eaux traitées en vue de leur potabilisation.

Préférentiellement, ledit composé oxydant utilisé dans le cadre du présent procédé est l'ozone. Comme il a déjà été précisé, ce composé est un oxydant puissant pouvant, sous certaines conditions connues de l'homme de l'art, donner naissance à des radicaux libres OH^{·} très oxydants, et permettant la destruction complète de la matière organique en la minéralisant en dioxyde de carbone et en sels minéraux. D'autres oxydants peuvent toutefois être envisagés par l'homme du métier.

Avantageusement, ledit support adsorbant est choisi dans le groupe constitué par le charbon, l'alumine, l'oxyde de cuivre, l'oxyde de magnésium, le dioxyde de titane et l'oxyde de zinc. Ces composés minéraux peuvent être utilisés sous forme activée. On notera que l'on pourra utiliser l'un seulement de ces supports adsorbants ou bien les utiliser en combinaison.

On désigne dans la présente demande par support adsorbant tout support en un matériau tel qu'il retient en son sein un pourcentage important des composés chargeant les effluents, typiquement les matières organiques. L'action de rétention résulte suivant les cas d'un phénomène d'adsorption proprement dite, de rétention physique dans les pores par attraction électrostatique (Forces de Van der Waals), d'échange d'ions, etc...

Les supports adsorbants utilisés dans le cadre de la présente invention, c'est-à-dire le charbon, l'alumine, l'oxyde de cuivre, l'oxyde de magnésium, le dioxyde de titane et l'oxyde de zinc pris séparément ou bien en combinaison, offrent une forte capacité de rétention de la matière organique contenue dans les eaux.

Cette capacité d'adsorption varie en fonction de certains paramètres :
- les propriétés physico-chimiques du matériau (surface spécifique, porosité, granulométrie et fonctions superficielles, telles que notamment des fonctions carboxyliques),
- les propriétés physico-chimiques de l'effluent, telles que son pH, la solubilité, la masse molaire et la polarité des molécules à adsorber.

Afin d'augmenter encore l'efficacité du procédé selon l'invention, on peut utiliser des matériaux adsorbants activés. L'activation des adsorbants est une technique connue en soi. Elle permet, en utilisant des procédés thermiques et/ou chimiques, d'accroître la capacité d'adsorption de composés en augmentant leur surface spécifique, leur porosité et en modifiant leurs caractéristiques de surface.

D'une façon générale le matériau adsorbant utilisé dans le procédé selon l'invention sera d'autant plus performant que sa porosité et sa surface spécifique seront grandes. A titre d'exemple, le charbon actif présente, en général, une surface spécifique supérieure à 1000 m²/g. Quant aux oxydes métalliques activés à base d'aluminium et/ou de magnésium, leur surface spécifique dépasse 200m²/g.

Lorsque l'on choisira d'utiliser, en tant que matériau adsorbant, du charbon actif, celui-ci sera préférentiellement préalablement passivé par addition de silice ou d'un autre matériau minéral inerte vis-à-vis de l'ozone. Le charbon actif présente en effet l'inconvénient, dans certaines conditions, de décomposer l'ozone.

D'une façon préférentielle, on utilisera de l'alumine activée en tant que support adsorbant, combinée ou non avec un des autres supports adsorbants cités. En effet, l'alumine activée présente l'avantage d'être inerte vis-à-vis de l'ozone.

On notera que l'on pourra aussi, utiliser comme support adsorbant, une argile naturelle, telle que le kaolin. L'argile naturelle est en soi généralement moins efficace comme adsorbant, mais peut constituer un liant dans le cas d'un support en matériau composite (charbon actif et/ou alumine et/ou oxyde de magnésium, etc...).

Dans le cadre du procédé selon l'invention, le matériau adsorbant pourra être utilisé tant sous forme d'un lit fluidisé et présenter une granulométrie comprise entre environ 20 µm et environ 500 µm, que sous forme granulaire en lit fixe et présentant alors une granulométrie allant d'environ 500 µm à 15 mm. Les grains peuvent être obtenus par exemple par pelletisation. On pourra même envisager d'utiliser un matériau adsorbant présentant une granulométrie beaucoup plus élevée et allant jusqu'à 100 mm ou de mettre en oeuvre ce support adsorbant sous forme d'un garnissage multicellulaire se présentant sous la forme d'un nid d'abeille extrudé.

Le procédé devant conduire à l'obtention d'une quantité aussi faible possible de résiduels d'ozone, c'est-à-dire d'ozone en surdosage, l'ozone est préférentiellement injectée en quantité suffisante dans ledit effluent de façon telle que le ratio ozone/Demande Chimique en Oxygène de l'effluent soit compris entre environ 0,10 g/g et 2 g/g.

Préférentiellement, le procédé selon l'invention est mis en oeuvre dans une installation comprenant au moins une colonne de traitement présentant au moins une arrivée dudit effluent et au moins une sortie dudit effluent, ledit effluent transitant de façon continu dans ladite colonne, ladite colonne étant au moins partiellement remplie d'un support adsorbant permettant de retenir au moins une partie de la matière organique contenue dans lesdits effluents transitant dans ladite colonne, ladite installation comprenant des moyens d'introduction dans ladite colonne d'un composé oxydant permettant d'oxyder la matière organique retenue sur ledit support adsorbant.

Comme il a déjà été dit, le composé oxydant est préférentiellement de l'ozone. Ce composé est un gaz qui peut être produit sur le site de traitement à partir d'air ou d'oxygène. L'ozone doit être transférée dans la phase liquide afin d'oxyder la matière organique adsorbée sur le matériau support et celle restant dissoute dans l'eau. Le gaz ozoné est introduit dans l'effluent à oxyder par différents moyens connus de diffusion sous forme de bulles à partir desquelles l'ozone moléculaire est transférée vers la phase liquide conformément à la loi du transfert de masse de Fick.

On notera que lesdits moyens d'injection du composé oxydant, pourront être soit intégrés dans la colonne (celle-ci constituera alors un réacteur triphasique -effluent + gaz oxydant + support adsorbant-) soit placés en amont de celle-ci (qui constituera alors un réacteur biphasique -effluent ozoné + support adsorbant-).

Préférentiellement, ladite arrivée des effluents, ladite sortie et lesdits moyens d'injection du composé oxydant sont conçus de façon telle que l'écoulement desdits effluents dans ladite colonne puisse avoir lieu à co-courant de l'injection dudit composé oxydant. Une telle injection à co-courant facilite l'action du composé oxydant dans le support adsorbant.

Ainsi, ladite arrivée des effluents et lesdits moyens d'injection du composé oxydant sont avantageusement prévus en pied de colonne, la sortie des effluents étant prévue en tête de colonne.

Toutefois une diffusion du composé oxydant à contre-courant est envisageable, pourvu qu'on maîtrise les vitesses d'écoulement de l'effluent d'une part, et des gaz de traitement d'autre part, permettant une perte de charge acceptable sur le liquide et sur le gaz dans le support poreux.

Dans certains cas il pourra s'avérer nécessaire de concentrer la matière organique sur le matériau adsorbant préalablement à la mise en oeuvre du composé oxydant. En effet, pour des effluents faiblement chargés en matière organique, le composé oxydant n'est que faiblement efficace. Dans ce cas, il pourra être choisi d'utiliser une installation ne présentant qu'une seule colonne, selon un mode d'utilisation presentant deux phases:
- une première phase au cours de laquelle l'effluent transitera dans la colonne sans que les moyens d'injection du composé oxydant soient mis en oeuvre et permettant de concentrer ladite matière organique sur le matériau adsorbant et,
- une seconde phase au cours de laquelle l'effluent continuera de transiter à l'intérieur de la colonne, l'injection de l'oxydant ayant lieu pour oxyder la matière organique concentrée sur la matériau adsorbant.

Dans le cadre d'une telle utilisation, la durée de première phase et la durée de la seconde phase seront choisies en fonction de la charge en matière organique et pourront, par exemple, être comprises entre 1 et 60 minutes.

Il pourra aussi être choisi, d'utiliser une installation comprenant au moins deux colonnes montées en série, chacune des deux colonnes étant au moins partiellement remplie d'un support adsorbant et munie de moyens de diffusion d'un gaz oxydant.

Une telle installation présentant au moins deux colonnes comprendra préférentiellement des moyens permettant d'alimenter alternativement les moyens de diffusion de gaz oxydant de la première colonne et les moyens de diffusion de gaz oxydant de la deuxième colonne, de façon telle que la diffusion d'ozone ne soit effectuée que dans une seule des deux colonnes à la fois. De tels moyens (pouvant par exemple inclure une électrovanne et un système de temporisation) permettront ainsi de diriger le flux d'ozone alternativement vers une colonne puis vers l'autre colonne et ainsi de permettre à une colonne de concentrer la matière organique présente dans l'effluent sans subir l'action du gaz oxydant tandis que le gaz oxydant sera distribué dans l'autre colonne, puis d'alterner le mode de fonctionnement de chaque colonne. Une telle réalisation à deux colonnes permettra une utilisation continue de l'installation, contrairement à une installation à une seule colonne qui devra être utilisée en alternant les deux phases de fonctionnement telles que décrites ci-dessus.

En complément de l'alternance du flux de gaz oxydant dans les colonnes, on pourra aussi choisir d'alterner le flux de l'effluent dans celles-ci. Dans un tel cas de figure, l'installation comprendra des moyens permettant de faire transiter l'effluent soit d'abord dans la première colonne puis dans la deuxième colonne, soit d'abord dans la seconde colonne puis dans la première colonne.

Selon une autre variante, le procédé selon l'invention est mis en oeuvre dans une installation qui comprend au moins deux colonnes montées en parallèle, l'effluent transitant alternativement dans la première et dans la deuxième colonne, les moyens de diffusion de gaz oxydant fonctionnant alternativement dans l'une et l'autre colonne lorsque ledit effluent ne transite pas dans ladite colonne.

Selon une variante, la phase de concentration de la matière organique sans injection de composé oxydant est réalisée non pas en interrompant ou détournant le flux de gaz oxydant mais en détruisant ledit composé oxydant, c'est-à-dire l'ozone moléculaire, en co-injectant un élément décomposeur ou un réactif fortement réducteur.

L'élément décomposeur est avantageusement choisi dans le groupe constitué par le peroxyde d'hydrogène, les ions hydroxyles OH⁻, les rayonnements UV et les ultrasons. Il est préférentiellement constitué par le peroxyde d'hydrogène. La co-injection d'un élément décomposeur de l'ozone présente, en outre, l'avantage complémentaire de réaliser localement (à l'entrée du réacteur) en amont du matériau adsorbant, une barrière oxydante du fait que, comme il a été déjà précisé, il forme avec l'ozone des radicaux libres très oxydants renforçant l'efficacité de l'étape d'oxydation.

Le réactif fortement réducteur est avantageusement choisi dans le groupe constitué par le sulfite de sodium, l'hyposulfite de sodium et le dioxyde de soufre.

L'invention, ainsi que les différents avantages qu'elle procure seront plus facilement compris grâce à la description qui va suivre de plusieurs exemples de réalisation du procédé selon l'invention donnés à titre illustratif et non limitatif, et des dessins dans lesquels :
- la figure 1 représente une colonne d'ozonation,
- la figure 2 représente une installation comprenant deux colonnes montées en série,
- la figure 3 représente une chaîne de traitement de lixiviats de décharge comprenant une installation d'ozonation sur supports adsorbants incluant une installation selon l'invention du type de celle représentée à la figure 2,
- la figure 4 représente un autre mode de réalisation d'une installation incluant deux colonnes montées en série et,
- la figure 5 représente une installation mettant en oeuvre deux colonnes montées en parallèle.

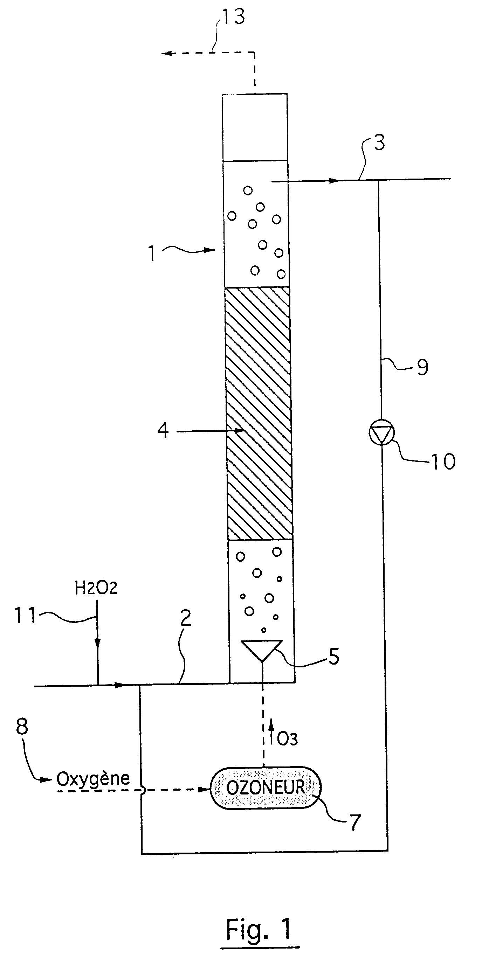

Selon la figure 1, l'installation d'épuration d'un effluent aqueux comprend une colonne de traitement 1, pourvue d'une arrivée 2 desdits effluents situés en pied de colonne et d'une sortie 3 de ceux-ci située en tête de colonne.

Par ailleurs, la colonne est pourvue d'un lit d'alumine activée 4. La colonne de traitement 1 est par ailleurs pourvue de moyens de diffusion 5 de bulles d'ozone également situés dans sa partie inférieure. Ces moyens de diffusion 5 sont reliés à un ozoneur 7 lui-même relié à une source d'oxygène 8.

Enfin, l'installation est pourvue d'un circuit de recirculation 9 des effluents traités incluant une pompe de recirculation 10, ce circuit de recirculation 9 permettant de recycler les effluents ayant transité dans la colonne 1 et de les ramener au niveau de l'arrivée 2 de cette colonne.

Par ailleurs, l'installation comprend des moyens d'injection 11 d'un réactif décomposeur de l'ozone branché sur la canalisation d'arrivée 2 par laquelle arrivent les effluents. Ce réactif, destiné à réduire les résiduels d'ozone susceptibles d'apparaître dans la colonne, peut par exemple être constitué par du peroxyde d'hydrogène mais on notera que d'autres composés pourront être aussi utilisés tels que les ions OH⁻ (injection de soude ou de chaux), les rayons UV, les ultra-sons ou encore le dioxyde de soufre, le sulfite de sodium et l'hyposulfite de sodium. Comme précisé ci-dessus, le peroxyde d'hydrogène présente d'une part l'avantage de pouvoir participer à l'oxydation et de concourir à la formation de radicaux libres OH^{·} formant une barrière d'oxydation, et d'autre part d'autoriser la réduction temporaire de l'oxydant injecté dans certaines phases de fonctionnement, le temps de permettre une concentration des matières organiques dans le support adsorbant, sans oxyder prématurément ces matières organiques.

On notera que la "barrière d'oxydation" est localisée à l'entrée de la colonne, c'est-à-dire dans la zone immédiate d'interaction de l'ozone et d'H₂O₂, du fait de la très faible durée de vie des radicaux OH^{·}.

Afin de permettre l'évacuation de l'ozone gazeux résiduel de la colonne 1, un évent 13 situé à l'extrémité supérieure de celle-ci est prévu pour acheminer ce gaz vers un destructeur thermique ou catalytique.

Lors de l'utilisation d'une telle installation, l'effluent aqueux arrive en continu par l'arrivée 2, transite dans la colonne 3 en passant par le lit 4 de matériau adsorbant et est récupéré en tête de colonne au niveau de la sortie 3.

Suivant la teneur en matière organique de l'effluent à traiter, on pourra choisir de faire fonctionner les moyens de diffusion 5 d'ozone de façon continue ou de façon discontinue.

Dans le cas où on choisira de faire fonctionner les diffuseurs 5 en continu, c'est-à-dire dans le cas où de l'ozone sera continûment distribuée dans la colonne 1, on alternera avantageusement une première phase au cours de laquelle le réactif réducteur (dans le présent exemple H₂0₂) sera injecté par les moyens 11 au niveau de l'arrivée 2 de la colonne avec une seconde phase au cours de laquelle aucune injection de réactif réducteur n'aura lieu. Ainsi, les résiduels d'ozone seront-ils périodiquement détruits grâce à l'injection périodique de peroxyde d'hydrogène, ce qui permet dans le même temps la concentration des matières organiques dans l'adsorbant, sans oxydation prématurée inefficace.

On pourra aussi choisir de faire fonctionner une telle installation selon deux phases :
- une première phase au cours de laquelle l'effluent transitera dans la colonne sans que les moyens de diffusion 5 d'ozone soient mis en oeuvre, organisant ainsi une concentration de la matière organique contenue dans l'effluent traité au sein du matériau adsorbant 4;
- une seconde phase au cours de laquelle les diffuseurs 5 seront mis en oeuvre, les effluents continuant à s'écouler dans la colonne 1. L'alternance de ces deux phases permet d'effectuer une concentration de la matière organique (première phase) et une oxydation de celle-ci tout en continuant à la concentrer (deuxième phase).

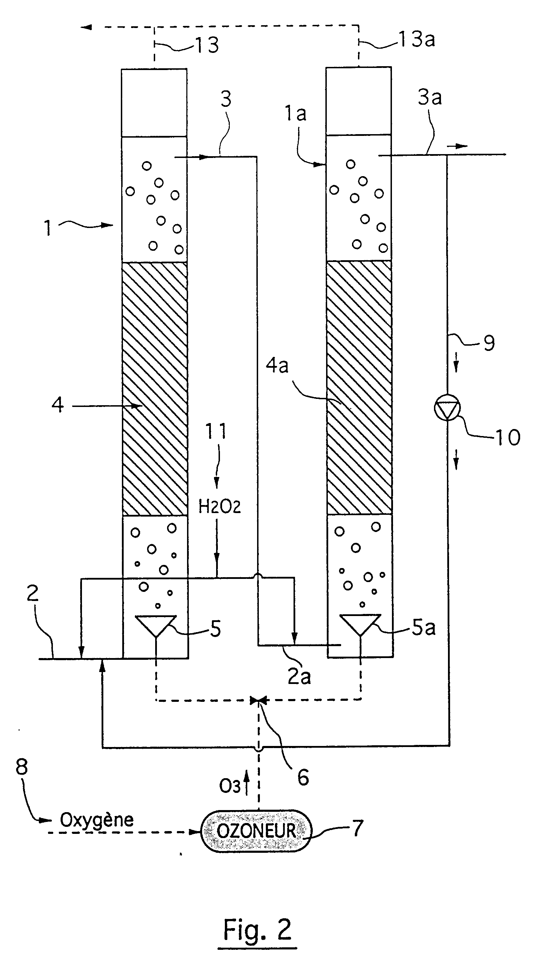

L'exemple de réalisation représenté à la figure 2 inclut quant à lui deux colonnes 1, 1a du type de celle représentée à la figure 1. Ces deux colonnes sont montées en série, la sortie 3 de la colonne 1 étant branchée sur l'entrée 2a de la colonne 1a.

A l'image de la colonne 1, la colonne 1a de l'installation représentée présente une sortie 3a située en tête de colonne, des moyens de diffusion d'ozone 5a situés en pied de colonne, un évent 13a d'évacuation de l'ozone résiduelle. L'installation comprend, à l'image de l'installation décrite à la figure 1, un circuit de recirculation 9 de l'effluent traité branché à la sortie 3a de la seconde colonne 1a, ledit circuit de recirculation 9 comprenant une pompe de recirculation 10 organisant le renvoi des effluents sortant de la colonne 1a vers l'entrée 2 de la première colonne 1.

Des moyens d'injection 11 d'un réactif réducteur (H₂0₂) sont prévus de façon à pouvoir injecter un tel réactif tant au niveau de l'arrivée 2 de la colonne 1 que de l'arrivée 2a de la colonne 1a.

Les moyens de diffusion d'ozone 5 et 5a sont reliés à un ozoneur commun 7.

Afin d'organiser la diffusion d'ozone soit dans la colonne 1 soit dans la colonne 1a, des moyens 6 sont prévus. De tels moyens qui peuvent par exemple être constitués par une électrovanne, permettent de faire fonctionner l'installation représentée à la figure 2 selon deux étapes alternées au cours desquelles les effluents transitent de façon continue d'abord dans la colonne 1 puis dans la colonne 1a :
- une première étape au cours de laquelle l'électrovanne permet l'alimentation en ozone le diffuseur 5 de la colonne 1 sans autoriser l'alimentation en ozone de la colonne 1a par le diffuseur 5a;
- une seconde étape au cours de laquelle l'électrovanne 6 permet la distribution d'ozone dans la colonne 1a en interdisant la distribution d'ozone dans la colonne 1.

Au cours de la première étape, la matière organique contenue dans l'effluent se concentre dans la colonne 1a et est oxydée seulement dans la colonne 1 tout en se concentrant également dans cette colonne. Inversement, lors de la seconde étape, la matière organique se concentre dans la colonne 1 et est oxydée et concentrée dans la colonne 1a.

On notera, qu'une telle installation pourra également être utilisée en remplaçant les moyens 6 d'alimentation sélective en ozone de l'une ou l'autre des colonnes 1 et 1a par des moyens permettant la diffusion d'ozone dans les deux colonnes. Dans ce cas, l'ozone sera diffusée en continu dans les colonnes 1 et 1a et on choisira d'injecter périodiquement le réactif décomposeur (H₂O₂) grâce aux moyens 11 de façon à neutraliser l'effet oxydant de l'ozone dans les intervalles de mise en concentration des matières organiques dans les supports 4 et 4a.

Des essais comparatifs ont été réalisés pour tester l'efficacité relative de l'injection séquentielle et de l'injection continue d'O₃ dans un jeu de deux colonnes en série suivant l'invention pour le traitement d'une eau de rivière dans un premier exemple et d'un lixiviat dans un second exemple.

### Exemple 1: traitement d'une eau de rivière.

On cherche à abattre la matière organique d'une eau de rivière à son plus bas niveau possible en vue de sa potabilisation. La matière organique est quantifiée par l'indice permanganate (IP) et l'absorbance UV 254 nm. Le support adsorbant est à base d'oxyde d'aluminium. Les résultats d'essais d'oxydation figurent dans le tableau I suivant (mêmes conditions expérimentales pour chaque essai).

**TABLEAU I**

| Essai | Support adsorbant | O₃ | Δ IP % | Δ UV 254 % |
|---|---|---|---|---|
| I | oui | non | 3 % | 5 % |
| II | non | continu | 20,4 % | 56 % |
| III | oui | continu | 37,8 % | 67,9 % |
| IV | oui | séquentiel | 42,1 % | 69,5 % |
| dose d'ozone de 4ppm, temps de contact de 5 minutes, | | | | |
| IP initial = 2,50 mg0₂/l UV 254 initial = 0,390 cm | | | | |

L'injection de l'ozone de façon séquencée conduit à de meilleures performances comparée à l'injection en continu.

### Exemple 2 : Traitement des lixiviats de décharge.

Les essais ont été conduits sur un lixiviat présentant les caractéristiques suivantes :

| | |
|---|---|
| pH : | 8,4 |
| DCO : | 2 300 mg/l |
| DBO₅ : | 210 mg/l |
| COT : | 735 mg/l |
| NH₄⁺ : | 725 mg/l |

A caractéristiques dimensionnelle et temps et vitesse de passage constantes, on a obtenu les résultats figurant en tableau II.

**TABLEAU II**

| Essai | lixiviat | O3 | H₂O₂ | DCO entrée mg/l | DCO sortie mg/l | Δ DCO % |
|---|---|---|---|---|---|---|
| | brut | non | non | 2000 | 1480 | 26 |
| I | brut | continu | non | 2000 | 222 | 88,9 |
| II | brut | continu | séquentiel | 2000 | 155 | 92,3 |
| III | dénitrifié | continu | non | 1360 | 150 | 88,9 |
| IV | dénitrifié | continu | continu | 1360 | 95 | 93,0 |
| V | dénitrifié | continu | séquentiel | 1360 | 55 | 96,0 |

Les essais I et II portent sur un traitement de lixiviat brut.

Les essais III, IV et V portent sur un traitement de lixiviat dénitrifié.

L'introduction séquentielle de H₂O₂ aux essais II et V permet de constituer une barrière oxydante en entrée de colonne dans les intervalles de coinjection 0₃ + H₂O₂, tout en permettant au matériau adsorbant de se charger dans ces intervalles en matières organiques sans ozonation précoce.

On constate que les rendements obtenus sont tous supérieurs à 80% lorsque de l'ozone est injecté. Les meilleurs résultats sont obtenus dans le cas des coinjections séquentielles avec le réactif décomposeur (H₂O₂).

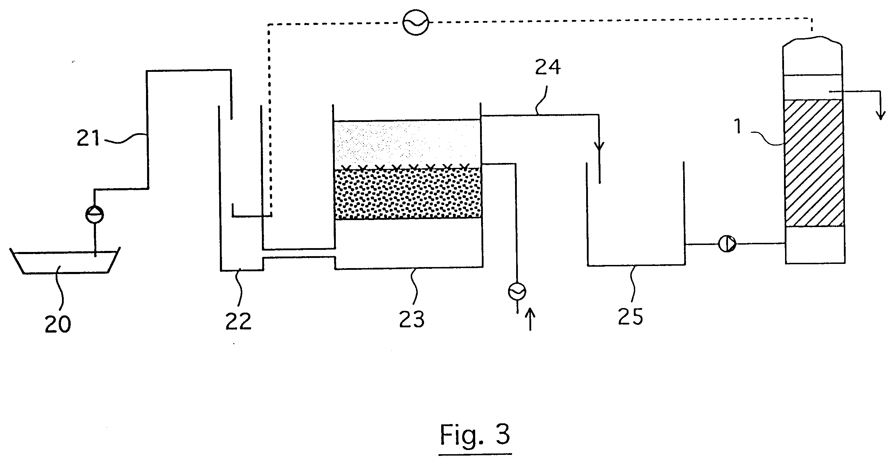

La figure 3 représente schématiquement une filière de traitement d'un lixiviat de décharge, selon l'invention.

Cette installation comprend un bassin 20 de récupération du lixiviat brut communiquant avec une canalisation 21 d'acheminement de ce lixiviat vers une colonne de mise en charge 22 d'une unité de nitrification 23. L'effluent sortant de cette unité 23 est acheminée par une canalisation 24 vers un réservoir 25. La sortie de ce bassin 25 est dirigée vers une installation d'épuration du type de celle représentée à la figure 2 (seule la colonne 1 de cette installation est montrée sur la figure 3).

### Exemple 3 : Oxydation sur des supports adsorbants différents.

Une installation d'épuration selon l'invention de la filière représentée à la figure 3 a été testée dans les conditions opératoires suivantes :
- temps de contact de l'effluent dans la colonne 1 : 30 minutes à deux heures; au total ; temps de contact de 15 mn dans le support poreux;
- pression atmosphérique et température ambiante de 18°C;
- ratio O₃ injecté/DCO variant de 0,10 à 2g/g ;
- saturation préalable des matériaux adsorbants par la matière organique du lixiviat pendant plusieurs jours avant de lancer les essais d'oxydation.

Deux types de supports adsorbants constituant les lits 4 de la colonne ont été testés, le charbon actif et l'alumine. Des essais comparatifs ont également été effectués, en utilisant, à la place de la substance adsorbante, un matériau de garnissage non adsorbant, de même granulométrie que celui-ci. A ce titre, on a utilisé du schiste et du quartz.

Les résultats quant à la DCO finale obtenus après traitement sont donnés dans le tableau III.

**TABLEAU III**

| Dose d'ozone en g O3/g DCO | Type de matériau adsorbant | DCO initiale mg/1 | DCO finale mg/1 | DCO Elim. | DBO5 finale mg/1 | Ratio DCO/DBO5 |
|---|---|---|---|---|---|---|
| 0 | Sans | 2 400 | - | - | 200 | 12 |
| 0 | Charbon | 3 400 | 1 580 | 53% | - | - |
| 0 | Alumine | 2 000 | 1 480 | 26% | - | - |
| 1 | Charbon | 3 400 | 664 | 80% | 120 | 5,5 |
| 1,5 | Charbon | 3 400 | 552 | 84% | 125 | 4,5 |
| 1,5 | Schiste (1) | 3 410 | 1 332 | 60% | - | - |
| 1,5 | Quartz (1) | 3 410 | 1 269 | 62% | - | - |
| 2 | Charbon | 3 410 | 350 | 90% | 85 | 4,1 |
| 1 | Alumine | 2 200 | 386 | 82% | 32 | 12,1 |
| 1,5 | Alumine | 2 100 | 220 | 89% | 35 | 6,3 |
| 1,5* | Alumine | 2 400 | 148 | 93,8% | 30 | 5,0 |

| | | | | | | |
|---|---|---|---|---|---|---|
| * Ajoût de H₂O₂ à la dose de 0,3 g/gO₃ soit 0,45 g/g DCO | | | | | | |
| (1) Essai sans adsorption, mais avec un support de garnissage de même granulométrie que le support adsorbant. | | | | | | |

Selon ce tableau, il apparaît que, pour la même dose d'ozone, l'ozonation sur support adsorbant permet d'augmenter le rendement d'élimination de la DCO de 20 à 30% par rapport à une ozonation seule sur support non adsorbant.

Par ailleurs, ce tableau permet de constater que le support adsorbant constitué par de l'alumine est le plus efficace.

Pour une dose d'ozone de 1,5 g par g de DCO, il est possible d'atteindre une dégradation de 90% de la DCO grâce à un tel catalyseur. Ce rendement peut être significativement augmenté par ajoût de peroxyde d'hydrogène simultanément à l'ozone. Le rendement obtenu est alors de 94%. Il permet d'obtenir un lixiviat traité avec moins de 150 mg d'oxygène par litre en DCO.

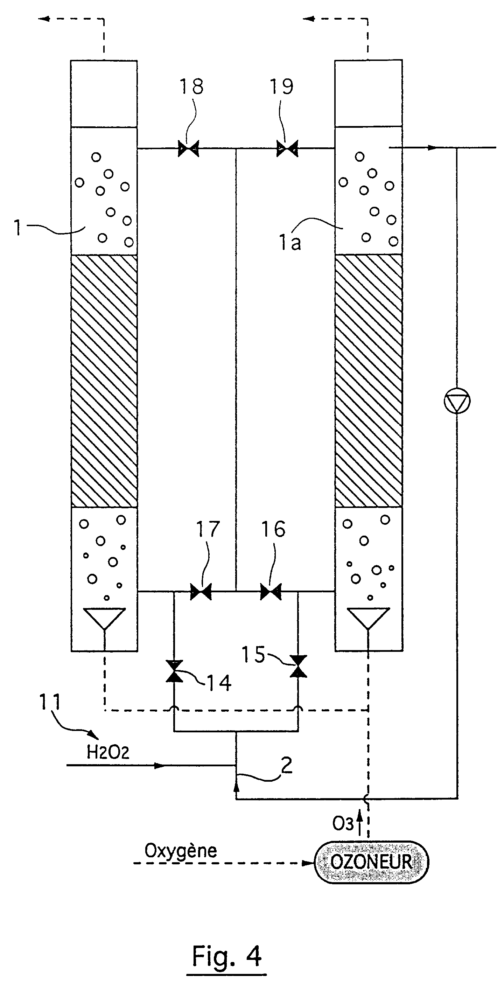

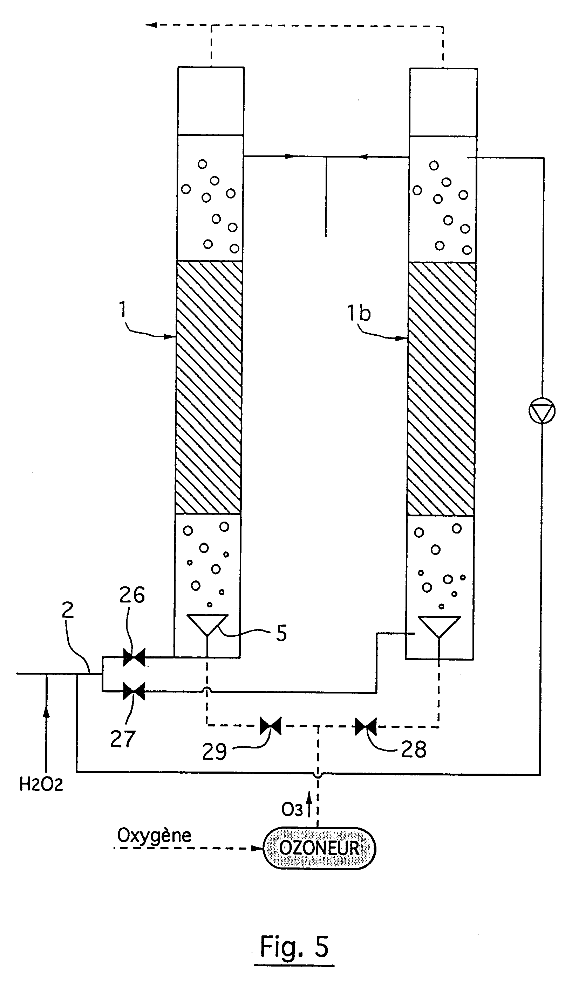

Les figures 4 et 5 représentent d'autres modes de réalisation de l'installation selon l'invention. La figure 4 montre une installation mettant en jeu deux colonnes 1, 1a montées en série. L'installation présente des moyens constitués par des électrovannes 14, 15, 16, 17, 18 et 19 organisant le transit de l'effluent arrivant par l'arrivée 2 dans l'installation :
- soit en passant d'abord dans la colonne 1 puis dans la colonne 1a,
- soit en passant d'abord dans la colonne 1a puis en passant ensuite dans la colonne 1.

Ainsi, lorsque les électrovannes 14, 16, 18 sont ouvertes, les électrovannes 15, 17, 19 sont automatiquement fermées et l'écoulement de l'effluent dans l'installation s'effectue en transitant d'abord à travers la colonne 1 puis à travers la colonne 1a.

Inversement, lorsque les électrovannes 14, 16 et 18 sont fermées, les électrovannes 15, 17 et 19 sont obligatoirement ouvertes organisant l'écoulement de l'effluent en premier temps dans la colonne 1a puis dans la colonne 1.

Dans le cadre de l'utilisation d'une telle installation, on peut choisir de faire fonctionner les moyens de distribution d'ozone soit en continu dans les deux colonnes, soit de façon alternée entre les colonnes.

Comme déjà mentionné, le cas d'un fonctionnement en continu correspond par exemple au cas du traitement d'effluents suffisamment chargés en matières organiques.

L'alimentation alternée grâce à une utilisation adéquate du jeu de vannes 14 à 19 permet le traitement des effluents faiblement chargés. Dans une variante, on peut choisir aussi de diffuser en continu de l'ozone dans les deux colonnes, tout en injectant en continu grâce aux moyens 11 un réactif réducteur (H₂0₂), de façon alternée entre les deux colonnes.

La figure 5 représente un mode de réalisation supplémentaire de l'installation.

Selon ce mode de réalisation, l'installation comprend deux colonnes 1, 1b montées en parallèle. Ces colonnes 1, 1b présentent sensiblement la même structure que celle de la colonne représentée à la figure 1.

Le circuit d'ozonation est pourvu de vannes 28, 29 autorisant la distribution d'ozone soit dans la colonne 1 soit dans la colonne 1b. De cette façon, il est possible pour chaque colonne de prévoir des cycles successifs constitués chacun d'une première phase de concentration de matières organiques dans le substrat, suivie d'une seconde phase d'ozonation de la matière organique concentrée.

Dans une variante, on peut prévoir aussi que l'ozonation intervient dans chaque colonne en interrompant le flux d'effluents. Dans ce cas, deux vannes 26, 27 sont prévues pour organiser l'écoulement de l'effluent soit dans la colonne 1 soit dans la colonne parallèle 1b.

Lorsque l'électrovanne 26 est ouverte, l'électrovanne 27 est fermée et seule la colonne 1 est alimentée en effluents. Dans ce cas, l'électrovanne 28 est ouverte tandis que l'électrovanne 29 est fermée de façon que l'ozonation ne se produise que dans la colonne non alimentée. Lors d'une étape suivante, les électrovannes 26 et 28 sont fermées tandis que les électrovannes 27 et 29 sont ouvertes de façon à ce que l'ozonation se produise dans la colonne dans laquelle l'effluent ne s'écoule et dans laquelle la matière organique s'est concentrée lors de l'étape précédente.

Les phases de concentration de matière organique sans ozonation pourront aussi être réalisées en coinjectant un réactif réducteur avec l'ozone continûment distribuée dans les deux colonnes.

Les nombreux modes de réalisation de l'installation et du procédé selon l'invention ici décrits n'ont pas pour objet de réduire la portée de celle-ci. En particulier, on pourra envisager d'utiliser plus de deux colonnes montées en parallèle ou en série. On pourra aussi envisager d'utiliser un autre réactif oxydant que l'ozone et d'autres réactifs réducteurs que le peroxyde d'hydrogène.

## Revendications

1. Procédé d'épuration d'un effluent aqueux chargé en matière organique comprenant les étapes consistant à faire transiter ledit effluent aqueux à épurer à travers au moins une colonne de traitement (1) contenant au moins un support adsorbant et à oxyder ladite matière organique par injection d'au moins un composé oxydant,
caractérisé en ce que ledit support adsorbant est choisi de façon à être inerte vis-à-vis dudit réactif oxydant et caractérisé par :
- une première phase d'une durée comprise entre 1 et 60 minutes au cours de laquelle l'effluent transite dans ladite colonne,
. soit en absence d'injection dudit composé oxydant,
. soit en effectuant une co-injection dudit composé oxydant et d'au moins un élément décomposeur ou d'au moins un réactif fortement réducteur permettant de détruire ledit composé oxydant,
ladite première phase permettant de concentrer ladite matière organique sur ledit support adsorbant sans oxyder celle-ci,
- une seconde phase d'une durée comprise entre 1 et 60 minutes au cours de laquelle l'effluent transite dans la même colonne et au cours de laquelle le composé oxydant est injecté sans co-injection d'élément décomposeur ou de réactif fortement réducteur, ladite seconde phase permettant d'oxyder ladite matière organique concentrée sur ledit support adsorbant.

2. Procédé d'épuration selon la revendication 1 caractérisé en ce que ledit réactif oxydant est l'ozone.

3. Procédé d'épuration selon l'une des revendications 1 ou 2 caractérisé en ce que ledit support adsorbant est choisi dans le groupe constitué par le charbon actif passivé, l'alumine activée, l'oxyde de cuivre, l'oxyde de magnésium, le dioxyde de titane et l'oxyde de zinc, pris seuls et en combinaison.

4. Procédé d'épuration selon l'une des revendications 1 à 3 caractérisé en ce que ledit élément décomposeur est un réactif choisi dans le groupe constitué par le peroxyde d'hydrogène, la soude, la chaux, le sulfite de sodium, l'hyposulfite de sodium et le dioxyde de soufre.

5. Procédé d'épuration selon l'une des revendications 1 à 4 caractérisé en ce que l'élément décomposeur est constitué de rayons ultra violet ou d'ultra-sons.

6. Procédé d'épuration selon l'une des revendications 2 à 5 carctérisé en ce que l'ozone est injecté en quantité telle dans ledit effluent que le ratio ozone/Demande Chimique en Oxygène soit compris entre environ 0,10 g/g et 2 g/g.

7. Procédé selon l'une des revendications 1 à 6 caractérisé en ce qu'il est mis en oeuvre dans une installation comprenant au moins une colonne de traitement (1) présentant au moins une arrivée (2) dudit effluent et au moins une sortie (3) dudit effluent, ladite colonne (1) étant au moins partiellement remplie d'un support adsorbant (4) permettant de retenir au moins une partie de la matière organique contenue dans lesdits effluents transitant dans ladite colonne (1), ladite installation comprenant des moyens d'injection (5) dans ladite colonne (1) d'un réactif permettant d'oxyder la matière organique retenue dans ledit support adsorbant (4), ledit support adsorbant étant inerte vis-à-vis dudit réactif oxydant.

8. Procédé selon la revendication 7 caractérisé en ce que ladite arrivée (2), ladite sortie (3) et lesdits moyens d'injection (5) de réactifs oxydant sont conçus de façon telle que l'écoulement desdits effluents dans ladite colonne (1) a lieu à co-courant de l'injection dudit réactif oxydant.

9. Procédé selon la revendication 8 caractérisé en ce que ladite arrivée (2) des effluents et lesdits moyens d'injection (5) du réactif oxydant sont prévus en pied de colonne, la sortie des effluents (3) étant prévue en tête de colonne.

10. Procédé selon l'une des revendications 7 à 9 caractérisé en ce'il est mis en oeuvre dans au moins deux colonnes (1, 1a) montées en série, chacune des deux colonnes étant au moins partiellement remplie d'un support adsorbant (4, 4a) et munie de moyens d'injection (5, 5a) du réactif oxydant.

11. Procédé selon la revendication 10 caractérisé en ce qu'il comprend une étape consistant à alimenter alternativement les moyens d'injection (5, 5a) de réactif oxydant de la première colonne (1) et les moyens d'injection du réactif oxydant de la deuxième colonne (1a), de façon telle que l'injection d'ozone ne soit effectuée que dans une seule des deux colonnes (1, 1a) à la fois.

12. Procédé selon la revendication 11 caractérisé en ce qu'il comprend une étape consistant à faire transiter l'effluent alternativement soit d'abord dans la première colonne (1) puis dans la deuxième colonne (1a), soit d'abord dans la seconde colonne (1a) puis dans la première colonne (1).

13. Procédé selon l'une des revendications 7 ou 8 caractérisé en ce qu'il est mis en oeuvre dans au moins deux colonnes montées en parallèle (1, 1b), les moyens d'injection du réactif oxydant fonctionnant alternativement dans l'une et l'autre colonne.

14. Procédé selon l'une des revendications 7 ou 8 caractérisé en ce qu'il est mis en oeuvre dans au moins deux colonnes montés en parallèle (1, 1b), l'effluent transitant alternativement dans la première et dans la deuxième colonne, les moyens d'injection du réactif oxydant fonctionnant alternativement dans l'une et l'autre colonne lorsque ledit effluent ne transite pas dans ladite colonne.

15. Procédé selon l'une des revendications 7 à 14 caractérisé en ce que la ou lesdites colonnes (1, 1a, 1b) sont munies de moyens d'injection d'un élément décomposeur permettant de détruire les résiduels de réactif oxydant.

## Claims

1. Method for the purification of an aqueous effluent loaded with organic matter, comprising the steps entailing passing the said aqueous effluent to be purified through at least one treatment column (1) containing at least one sorbent support and oxidising the said organic matter by injection of at least one oxidising compound,
characterised in that the said sorbent support is chosen so as to be inert with respect to the said oxidising agent, and characterised by:
- a first phase having a duration of between 1 and 60 minutes, during which the effluent passes into the said column,
. either in the absence of injection of the said oxidising compound,
. or while carrying out co-injection of the said oxidising compound and of at least one decomposing element or of at least one strong reducing agent enabling the said oxidising compound to be destroyed,
the said first phase enabling the said organic matter to be concentrated on the said sorbent support without oxidising said organic matter,
- a second phase having a duration of between 1 and 60 minutes, during which the effluent passes into the same column and during which the oxidising compound is injected without co-injection of decomposing element or of strong reducing agent, the said second phase enabling the said organic matter concentrated on the said sorbent support to be oxidised.

2. Purification method according to Claim 1, characterised in that the said oxidising agent is ozone.

3. Purification method according to one of Claims 1 or 2, characterised in that the said sorbent support is chosen from the group comprising passivated active charcoal, activated alumina, copper oxide, magnesium oxide, titanium dioxide and zinc oxide, taken on their own and in combination.

4. Purification method according to one of Claims 1 to 3, characterised in that the said decomposing element is a reagent chosen from the group comprising hydrogen peroxide, soda, lime, sodium sulphite, sodium hyposulphite and sulphur dioxide.

5. Purification method according to one of Claims 1 to 4, characterised in that the decomposing element comprises ultraviolet or ultrasonic radiation.

6. Purification method according to one of Claims 2 to 5, characterised in that the ozone is injected in an amount such in the said effluent that (sic) the ozone/Chemical Oxygen Demand ratio is between approximately 0.10 g/g and 2 g/g.

7. Method according to one of Claims 1 to 6, characterised in that it is carried out in an installation comprising at least one treatment column (1) having at least one inlet (2) for the said effluent and at least one outlet (3) for the said effluent, the said column (1) being at least partially filled with a sorbent support (4) enabling at least some of the organic matter contained in the said effluents passing into the said column (1) to be retained, the said installation comprising means for injection (5) into the said column (1) of a reagent enabling the organic matter retained in the said sorbent support (4) to be oxidised, the said sorbent support being inert with respect to the said oxidising agent.

8. Method according to Claim 7, characterised in that the said inlet (2), the said outlet (3) and the said means for injection (5) of oxidising agents are designed such that the flow of the said effluents into the said column (1) takes place in co-current with injection of the said oxidising agent.

9. Method according to Claim 8, characterised in that the said inlet (2) for the effluents and the said means for injection (5) of the oxidising agent are provided at the bottom of the column, the outlet for the effluents (3) being provided at the top of the column.

10. Method according to one of Claims 7 to 9, characterised in that it is carried out in at least two columns (1, 1a) installed in series, each of the two columns being at least partially filled with a sorbent support (4, 4a) and provided with means for injection (5, 5a) of the oxidising agent.

11. Method according to Claim 10, characterised in that it comprises a step entailing alternate feeding of the means for injection (5, 5a) of oxidising agent for the first column (1) and the means for injection of oxidising agent for the second column (1a), such that the injection of ozone will take place only in one of the two columns (1, 1a) at a time.

12. Method according to Claim 11, characterised in that it comprises a step entailing passing the effluent alternately either first into the first column (1) and then into the second column (1a) or first into the second column (1a) and then into the first column (1).

13. Method according to one of Claims 7 or 8, characterised in that it is carried out in at least two columns installed in parallel (1, 1b), the means for injection of the oxidising agent operating alternately in the one and the other column.

14. Method according to one of Claims 7 or 8, characterised in that it is carried out in at least two columns installed in parallel (1, 1b), the effluent passing alternately into the first and into the second column, the means for injection of the oxidising agent operating alternately in the one and the other column when the said effluent is not passing into the said column.

15. Method according to one of Claims 7 to 14, characterised in that the said column or columns (1, 1a, 1b) are provided with means for injection of a decomposing element enabling the residues of oxidising agent to be destroyed.

## Patentansprüche

1. Reinigungsverfahren für mit organischen Stoffen belastete Abwässer, welches die Schritte enthält, die darin bestehen, daß das zu reinigende wäßrige Abwasser zuerst durch mindestens eine Reinigungssäule (1), mit mindestens einem Adsorptionssubstrat geschickt wird und danach die organischen Stoffe durch Einspritzung von mindestens einem Oxidationsmittel oxydiert werden,
dadurch gekennzeichnet, daß das Adsorptionssubstrat so gewählt wird, daß es gegenüber dem Oxidationsmittel inert ist und
- durch eine erste Phase, die 1 bis 60 Minuten dauert, während der das Abwasser durch die Säule läuft,
. entweder ohne Einspritzen des Oxidationsmittels,
. oder bei gleichzeitigem Einspritzen des Oxidationsmittels und mindestens eines zersetzenden Elementes oder mindestens eines stark reduzierenden Reagens, welches die Zerstörung des Oxidationsmittels ermöglicht,
wobei die erste Phase das Konzentrieren der organischen Stoffe auf das Adsorptionssubstrat ermöglicht, ohne dieses zu oxydieren,
- eine zweite Phase, die 1 bis 60 Minuten dauert, während der das Abwasser durch die gleiche Säule läuft während gleichzeitig das Oxydationsmittel eingespritzt wird, ohne gleichzeitiges Einspritzen eines Zersetzungselementes oder eines stark reduzierenden Reagens, wobei diese zweite Phase das Oxydieren der auf dem Adsorptionssubstrat konzentrierten organischen Stoffe ermöglicht.

2. Reinigungsverfahren gemäß Anspruch 1,
dadurch gekennzeichnet, daß es sich beim Oxydationsmittel um Ozon handelt.

3. Reinigungsverfahren gemäß einem der Ansprüche 1 oder 2,
dadurch gekennzeichnet, daß das Adsorptionssubstrat aus der Gruppe gewählt wird, die passivierte Aktivkohle, aktiviertes Aluminiumoxyd, Kupferoxyd, Magnesiumoxyd, Titandioxyd und Zinkoxyd, alleine oder kombiniert, umfaßt.

4. Reinigungsverfahren gemäß einem der Ansprüche 1 bis 3,
dadurch gekennzeichnet, daß das zersetzende Element ein Reagens aus der Gruppe ist, die Wasserstoffsuperoxyd, Natriumkarbonat, Kalk, Natriumsulfit, Natriumhyposulfit und Schwefeldioxyd umfaßt.

5. Reinigungsverfahren gemäß einem der Ansprüche 1 bis 4,
dadurch gekennzeichnet, daß es sich beim zersetzenden Element um Ultraviolettstrahlung oder um Ultraschall handelt.

6. Reinigungsverfahren gemäß einem der Ansprüche 2 bis 5,
dadurch gekennzeichnet, daß das Ozon in solchen Mengen in das zu reinigende Abwasser eingespritzt wird, daß das Verhältnis Ozon /chemischer Sauerstoffbedarf in etwa zwischen 0,10 g/g und 2 g/g liegt.

7. Verfahren gemäß einem der Ansprüche 1 bis 6,
dadurch gekennzeichnet, daß es in einer Anlage angewandt wird, die mindestens eine Behandlungssäule (1) umfaßt, welche mindestens einen Zulauf (2) und mindestens einen Ablauf (3) für das Abwasser aufweist, wobei die Säule (1) mindestens teilweise mit einem Adsorptionssubstrat (4) gefüllt ist, welches das Zurückhalten von mindestens einem Teil des in dem durch die Säule (1) laufenden Abwassers enthaltene organische Stoffe ermöglicht, wobei die Anlage über Mittel (5) zum Einspritzen eines Reagens in die Säule (1) verfügt, welches das Oxydieren der im Adsorptionssubstrat (4) zurückgehaltenen organischen Stoffe ermöglicht, wobei das Adsorptionssubstrat gegenüber dem Oxydationsmittel inert ist.

8. Verfahren gemäß Anspruch 7,
dadurch gekennzeichnet, daß der Zulauf (2), der Ablauf (3) und die Einspritzmittel (5) für die Oxydationsmittel so konzipiert sind, daß das Abwasser in der Säule (1) mit dem Einspritzstrom des Oxydationsmittels fließt.

9. Verfahren gemäß Anspruch 8,
dadurch gekennzeichnet, daß der Abwasserzulauf (2) und die Einspritzmittel (5) für das Oxydationsmittel am Fuße der Säule angebracht sind, während der Abwasserablauf (3) am Kopf der Säule angebracht ist.

10. Verfahren gemäß einem der Ansprüche 7 bis 9,
dadurch gekennzeichnet, daß es in mindestens zwei in Serie angebrachte Säulen (1, 1a) abläuft, wobei jede der zwei Säulen mindestens teilweise mit einem Adsorptionssubstrat (4, 4a) gefüllt ist und über Einspritzmittel (5, 5a) für das Oxydationsmittel verfügt.

11. Verfahren gemäß Anspruch 10,
dadurch gekennzeichnet, daß es einen Schritt umfaßt, der im abwechselnden Speisen der Einspritzmittel (5, 5a) für das Oxydationsmittel der ersten Säule (1) und der zweiten Säule (1a) besteht, so daß das Einspritzen von Ozon jeweils in nur einer der Säulen (1, 1a) stattfindet.

12. Verfahren gemäß Anspruch 11,
dadurch gekennzeichnet, daß es einen Schritt umfaßt, bei dem das Abwasser abwechselnd entweder durch die erste Säule (1) und dann durch die zweite Säule (1a), oder aber zuerst durch die zweite Säule (1a) und dann durch die erste Säule (1) fließt.

13. Verfahren gemäß einem der Ansprüche 7 oder 8,
dadurch gekennzeichnet, daß es in mindestens zwei parallel angebrachten Säulen (1, 1b) abläuft, wobei die Einspritzmittel für das Oxydationsmittel abwechselnd in der einen und in der anderen Säule funktionieren.

14. Verfahren gemäß einem der Ansprüche 7 oder 8,
dadurch gekennzeichnet, daß es in mindestens zwei parallel angebrachten Säulen (1, 1b) abläuft, wobei das Abwasser abwechselnd durch die erste und durch die zweite Säule fließt und wobei die Einspritzmittel für das Oxydationsmittel abwechselnd in der einen und in der anderen Säule funktionieren, jeweils wenn kein Abwasser durch die betroffene Säule fließt.

15. Verfahren gemäß einem der Ansprüche 7 bis 14,
dadurch gekennzeichnet, daß die Säule(n) (1, 1a, 1b) über Einspritzmittel für ein Zersetzungselement verfügt(en), welches die Zerstörung der Oxydationsmittelrückstände ermöglicht.
